(19) Europäisches Patentamt
European Patent Office
Office européen des brevets

(11) Publication number: **0 399 799 A2**

(12) **EUROPEAN PATENT APPLICATION**

(21) Application number: **90305591.1**

(22) Date of filing: **23.05.90**

(51) Int. Cl.[5]: **C08G 63/85, C08G 63/183, C08G 63/83**

(30) Priority: **24.05.89 US 356545**

(43) Date of publication of application: **28.11.90 Bulletin 90/48**

(84) Designated Contracting States: **AT BE CH DE FR GB IT LI LU NL SE**

(71) Applicant: **AMOCO CORPORATION**
**200 East Randolph Drive**
**Chicago Illinois 60601(US)**

(72) Inventor: **James, David Eugene**
**1133 Woodland Hills Road**
**Batavia Illinois 60501(US)**
Inventor: **Packer, Lawrence Graham**
**2090 Carriage Hill**
**Lisle, Illinois 60532(US)**

(74) Representative: **Ritter, Stephen David et al**
**Mathys & Squire 10 Fleet Street**
**London EC4Y 1AY(GB)**

(54) **Preparation of polyethylene terephthalate.**

(57) A process is disclosed for preparing polyethylene terephthalate having a predetermined intrinsic viscosity which involves the direct esterification of terephthalic acid with ethylene glycol followed by the polycondensation of the esterification product using a polycondensation catalyst system containing cobalt, manganese-, and antimony-containing components.

EP 0 399 799 A2

Xerox Copy Centre

# PREPARATION OF POLYETHYLENE TEREPHTHALATE

## BACKGROUND OF THE INVENTION

### Field of the Invention

This invention relates generally to the preparation of polyethylene terephthalate which involves the direct esterification of terephthalic acid with ethylene glycol followed by the polycondensation of the esterification product, and more particularly concerns the use in such preparation of a polycondensation catalyst system consisting essentially of cobalt-, manganese- and antimony-containing components at critical concentration levels.

### Description of the Prior Art

Polyethylene terephthalate is the principal polymer for polyester fibers, polyester films and resins for bottles and like containers. Even after being made from highly pure materials, the resulting polyethylene terephthalate contains colored impurities, fluorescent impurities and other undesirable high molecular weight impurities which are by-products formed during the preparation of polyethylene terephthalate. Such impurities are generally highly undesirable in the applications to which polyethylene terephthalate is typically put, and methods for preparing polyethylene terephthalate having reduced contents of such impurities are highly desirable.

Synthetic linear polyesters of fiber-forming molecular weight, such as polyethylene terephthalate, are prepared by processes involving an esterification stage, followed by a polymerization stage. Esterification is conducted by reacting terephthalic acid with ethylene glycol (direct esterification) or by esterifying the terephthalic acid with a monohydric alcohol such as methyl alcohol and then transesterifying the resulting dimethyl terephthalate ester with ethylene glycol (transesterification or indirect esterification) in the the presence of a transesterification catalyst, to thereby produce the bis ethylene glycol ester of terephthalic acid, with methyl alcohol and excess ethylene glycol being distilled off. This product is then polymerized by a condensation reaction with the elimination of ethylene glycol by heating the product at elevated temperatures under reduced pressures until a high molecular weight product is formed.

In the direct esterification process, terephthalic acid is condensed with ethylene glycol to form the ester reaction product. The low molecular weight prepolymer or oligomer is then polymerized by heating under reduced pressures to form a high molecular weight polyester product. The present invention involves a direct esterification process, not a transesterification or indirect esterification process.

Significant differences result depending on whether direct or indirect esterification is employed to prepare high molecular weight polyethylene terephthalate from ethylene glycol and either terephthalic acid or a terephthalic acid derivative, such as dimethyl terephthalate, respectively. For example, in the indirect esterification stage, methyl ester end groups of dimethyl terephthalate are replaced by ester interchange with glycol ester end groups. This reaction requires the use of transesterification catalysts. Typically the mole ratio of ethylene glycol-to-dimethylterephthalate employed in this reaction is at least 2, under which conditions there is obtained the bis-ethylene glycol ester having the formula:

$HOCH_2CH_2-O-CO-R-CO-CH_2CH_2OH$

where R is the phenyl ring.

Significantly, the catalyzed indirect esterification is inhibited by carboxylic acids such as terephthalic acid. Therefore, the prepolymer formed by the indirect esterification reaction must have a very low carboxyl end group content and typically is less than one microequivalent per gram. If the indirect esterification reaction does not result in very high conversion, methyl-terminated prepolymer will be produced, which will not afford high molecular weight polymer in the polycondensation stage.

By contrast, the direct esterification of terephthalic acid does not require the use of a catalyst and generally is uncatalyzed. Also, since the mole ratio of ethylene glycol to terephthalic acid employed in the direct esterification is less than 2, the resulting prepolymer has a degree of polymerization of at least one, preferably about 5. This prepolymer with the relatively high degree of polymerization will require less time to polymerize to a given high molecular weight polymer than will the aforesaid prepolymer formed by the aforesaid indirect esterification route. An additional significant difference is that all of the carboxylic acid end

groups in the prepolymer formed by direct esterification are not converted to ester end groups. Thus, the carboxyl end group content thereof is typically more than 100 microequivalents per gram. As disclosed in Berkau et al., U.S. Patent No. 3,551,386, these end groups react to build chain length during the following polycondensation stage.

Many catalysts have been proposed for use in one step or another in the manufacture of polyethylene terephthalate. These catalysts have not proven to be entirely satisfactory because fibers and filaments produced from the condensation polymers using the heretofore known catalysts do not possess the desired color and fluorescence characteristics, low content of high molecular weight impurities. Therefore, there has been a great need in the art to find a catalyst system which not only speeds up the reaction into or within the realm of that considered to be necessary for economic purposes and which is useful over approximately the entire range of molecular weights desired in the finished polymer, but also which produces a condensation polymer having good color and fluorescence characteristics, reduced content of high molecular weight impurities. Such an improved catalyst system is the cata lyst system consisting essentially of cobalt-, manganese-and antimony-containing components in the critical concentrations that are employed in the method of the present invention.

Catalyst systems containing cobalt, manganese and antimony components have been employed in prior art methods for the preparation of polyethylene terephthalate in which dimethyl terephthalate is transesterified as opposed to the method of the present invention in which terephthalic acid is esterified directly. For example, Adams, U.S. Patent No. 4,501,878 discloses a two-step process for the preparation of polyesters in which dimethyl terephthalate is transesterified with ethylene glycol in the presence of cobalt, manganese, zinc, calcium, "etc." and the ester exchange product is then polycondensed in the presence of antimony. Example 1 therein discloses the polycondensation of a prepolymer formed from dimethyl terephthalate, at 280 °C and at a pressure decreasing from 100 millimeters to 0.5 millimeter of mercury, and in the presence of 50 parts of cobalt, 110 parts of manganese, 250 parts of antimony and 90 parts of phosphorus per million parts of dimethylterephthalate.

Similarly, Russin et al., U.S. Patent No. 4,010,145 disclose a two-stage process for preparing polyesters in which an ester interchange reaction between dimethyl terephthalate and ethylene glycol in the presence of a combination of 25-110 parts of manganese, 10-100 parts of cobalt, 20-60 parts of titanium and 50-300 parts of antimony catalyst components per million parts by weight of dimethylterephthalate, followed by a polycondensation reaction in the presence additionally of a phosphate ester. The esterification is performed at elevated temperature and at at least atmospheric pressure, and the polycondensation reaction is performed at a higher temperature and reduced pressure until a polymer having the desired inherent viscosity is obtained. Comparative Examples 18 and 19 involve the use of 119 or 113 ppm of manga nese, 70 or 35 ppm of cobalt, 292 or 267 ppm of antimony and 170 or 130 ppm of phosphorus, respectively, and a mole ratio of ethylene glycol-to-dimethylterephthalate of 2.5:1. Tershansy et al., U.S. Patent No. 3,907,754 contains a very similar disclosure, and comparative Examples 13 and 14 therein correspond to comparative Examples 18 and 19 in U.S. Patent No. 4,010,145.

A catalyst system comprising the same combination of manganese, cobalt, titanium, and antimony components has also been employed in a method for the preparation of sulfo-modified polyesters involving the reaction of terephthalic acid ethylene glycol and a di-functional sulfo-monomer. In particular, Fagerburg et al., U.S. Patent No. 4,499,262 disclose a two-stage process for the preparation of sulfo-modified polyesters involving the reaction of a dicarboxylic acid, a di-functional sulfo-monomer and ethylene glycol, wherein the dicarboxylic acid component of the polyesters can be terephthalic acid or other dicarboxylic acid, and wherein a direct or indirect esterification step is followed by a polycondensation step. The esterification is performed at 160-300 °C and at elevated pressure. The esterification catalyst is a mixture of a titanium component with one or more additional metal-containing compounds containing metals such as 20-200 parts of manganese, zinc, 5-100 parts of cobalt, calcium, 50-300 parts of antimony, germanium, gallium and tin per million parts of the acid fraction of the polymer product. Preferably, the metals in such additional metal-containing compounds are manganese, cobalt or antimony. The polycondensation is carried out in the presence of a phosphate ester and at atmospheric or reduced pressure. Specific examples of mixtures of 105 ppm of cobalt, 44-48 ppm of manganese, 240-244 ppm of antimony, 45-55 ppm of titanium and 125-133 ppm of phosphorus-containing catalyst components are disclosed.

However, prior art methods for the preparation of polyethylene terephthalate by a process involving the direct esterification of terephthalic acid have not employed the combination of cobalt, manganese and antimony catalyst components alone at the critical concentration levels employed in the method of this invention. For example, Nakamura et al., U.S. Patent No. 3,325,454, disclose a process for preparing polyethylene terephthalate by a process involving the direct esterification of terephthalic acid with ethylene glycol in the presence of a metal-containing catalyst such as cobalt chloride, manganese acetate, calcium

acetate, lead acetate and antimony oxide, and present actual examples in which only the combination of catalysts of antimony oxide and either cobalt acetate or manganese acetate were employed. A phosphorus component is employed as a coloration stabilizer. The esterification is performed at a temperature above the boiling point of ethylene glycol and at a pressure above the vapor pressure of ethylene glycol. The polycondensation is performed at a high vacuum and at a temperature below 300 °C and below the melting point of polyethylene terephthalate.

Rod et al., U.S. Patent No. 3,803,210, disclose in Examples I-VI a process for making polyethylene terephthalate in which terephthalic acid is first esterified batchwise with ethylene glycol at a temperature of 220 °-250 °C, at a pressure that was slowly reduced from 4-6 kilograms per square centimeter to atmospheric in the presence of an esterification catalyst comprising 38 parts of cobalt and 98 parts of manganese per million parts of terephthalic acid employed in the esterification, and second, the resulting ester was subjected to polycondensation under a vacuum of 0.5 Torr, a final temperature of 280 °C and in the presence of a polycondensation catalyst comprising 307 parts of elemental antimony per million parts of terephthalic acid employed in the esterification. Example VII discloses a continuous esterification of terephthalic acid with ethylene glycol in the presence of an esterification catalyst comprising 45 parts of cobalt and 117 parts of manganese per million parts of terephthalic acid employed. This method requires the use of an inert diluent in a weight ratio of from 0.5:1 to 4:1 with respect to the amount of esterified acid formed.

Broughton et al., U.S. Patent No. 4,223,124, disclose a process for making polyethylene terephthalate in which terephthalic acid is reacted with ethylene glycol, wherein the ethylene glycol is added slowly over an extended period of time during the first or esterification stage of the process. The esterification is carried out in the presence of heat (for example 230-265 °C) generally under pressure (for example, 35 pounds per square inch gauge) and optionally with the use of conventional catalysts. The second or condensation stage is carried out generally under a vacuum of 5 millimeters of mercury or less and at 180-290 °C and in the presence of a condensation catalyst of "antimony, iron, titanium, zinc, cobalt, lead, manganese, niobium, and the like, as well known to those skilled in the art."

## OBJECTS OF THE INVENTION

It is therefore a general object of the present invention to provide an improved method for preparing polyethylene terephthalate by the direct esterification of terephthalic acid which overcomes the problems of the prior art methods and provides the aforementioned desirable features.

More particularly, it is an object of the present invention to provide an aforesaid improved method which affords polyethylene terephthalate having improved color and fluorescence characteristics, and a reduced content of high molecular weight impurities.

It is another object of the method of this invention to provide an aforesaid improved method using a catalyst system that accelerates the rate of the polycondensation reaction to form polyethylene terephthalate having improved color and fluorescence characteristics, and a reduced content of high molecular weight impurities from a prepolymer formed by the direct esterification of terephthalic acid.

Other objects and advantages of the present invention will become apparent upon reading the following detailed description and appended claims.

## SUMMARY OF THE INVENTION

These objects are achieved by an improved process for preparing polyethylene terephthalate having a predetermined intrinsic viscosity, comprising: (a) reacting ethylene glycol with terephthalic acid containing less than 500 parts of 4-carboxybenzaldehyde per million parts of terephthalic acid, at a mole ratio of from about 1.05 to about 1.5 moles of ethylene glycol per mole of terephthalic acid, at a temperature in the range of from about 250 °C. to about 280 °C. and at a pressure in the range of from about atmospheric to about 100 pounds per square inch gauge, to thereby form a product mixture comprising water and an esterification product of ethylene glycol and terephthalic acid, the reaction being continued until substantial cessation of the generation of water as a reaction product and until at least 97 mole percent of the carboxyl end groups of the esterification product have reacted, and removing water from the product mixture; and (b) heating the product mixture of step (a) in the presence of a catalyst consisting essentially of an antimony-containing component at a level of from about 175 to about 278 parts of antimony, a cobalt-containing component at a level of from about 5 to about 50 parts of cobalt, and a manganese-containing component at a level of from about 20 to about 150 parts of manganese, each calculated as the elemental metal, per million parts by weight of terephthalic acid employed in step (a), at a temperature in the range of from about 270° C. to about 300° C. and at a pressure in the range of from about 0.1 to about 25 millimeters of mercury, the heating being continued until the resulting polyethylene terephthalate product has the predetermined intrinsic viscosity, the resulting polyethylene terephthalate having improved color and fluorescence characteristics, and a reduced content of high molecular weight impurities.

## DETAILED DESCRIPTION

The method of the present invention is a two-stage process for preparing polyethylene terephthalate having a predetermined intrinsic viscosity and having improved color and fluorescence characteristics, and a reduced content of high molecular weight impurities. The first stage is the direct esterification of terephthalic acid with ethylene glycol to form an oligomer or prepolymer of diethylene terephthalate. The second stage is the polycondensation of the prepolymer formed in the first stage to form the aforesaid polyethylene terephthalate having the predetermined intrinsic viscosity.

The first stage involves reacting ethylene glycol with terephthalic acid that is sufficiently pure as to contain less than 500, preferably less than 200, parts of 4-carboxybenzaldehyde per million parts of terephthalic acid at a mole ratio of from about 1:05, preferably from about 1.15, to about 1.5, preferably to about 1.25, moles of ethylene glycol per mole of terephthalic acid. The esterification reaction is effected at a temperature in the range of from about 250° C, preferably from about 255° C, to about 280° C, preferably to about 275° C, and at a pressure in the range of from about atmospheric to about 100, preferably to about 60, pounds per square inch gauge.

The resulting product mixture comprises water and an esterification product of terephthalic acid and ethylene glycol, from which water is removed as the reaction proceeds. The esterification is continued until the desired degree of esterification is attained, as described herein.

Typically, the reaction is performed in a reactor equipped with a distillation column which is operated such that water passes therefrom as overhead and is thereby withdrawn from the reactor, and unreacted ethylene glycol is returned therefrom to the reactor. The reflux temperature at the head of the distillation column is controlled to maintain a temperature of the boiling point of water at the reaction pressure, for example, about 148° C at 50 pounds per square inch gauge. Completion of the esterification under the temperature and pressure employed is indicated by a substantial drop in the temperature at the top of the distillation column as a result of the termination of water distillation due, in turn, to the cessation of the generation of water as a product of the esterification. The first stage is continued until the aforesaid drop in the temperature at the head of the distillation column and until at least 97 mole percent of the carboxyl end groups in the product mixture are esterified. In order to effect the latter condition, it may be necessary or desirable to reduce the reaction pressure to about atmospheric pressure (still within the aforedescribed pressure range for this stage) in order to shift the equilibrium toward the formation of additional esterification product and water. The level of carboxyl end groups in the product mixture is determined by an acid-base titration.

The second or polycondensation stage involves heating the remaining product mixture from the first stage in the presence of the catalyst system described hereinbelow at a temperature in the range of from about 270° C, preferably from about 280° C, to about 300° C, preferably to about 290° C and at a pressure in the range of from about 0.1, preferably from about 0.5, to about 25, preferably to about 2, millimeters of mercury. The second stage is continued until polyethylene terephthalate having the predetermined intrinsic viscosity is formed.

Each of the aforesaid first and second stages of the method of the present invention is conducted in the absence of a separate solvent. Furthermore, the method of the present invention can be conducted on either a batch or continuous basis.

In a preferred embodiment of the method of this invention, the first or direct esterification stage is conducted in two steps -- that is, a primary esterification step followed by a secondary esterification step. In the primary esterification step, terephthalic acid is reacted with ethylene glycol to provide a glycol ester having a chain length or degree of polymerization greater than one, for example, 2 or 3, and a degree of esterification such that at least 85 mole percent, typically 90 mole percent or more, of the carboxyl end groups are esterified. The primary esterification stage is conducted at a temperature in the range of from

about 250° C, preferably from about 255° C, to about 280° C, preferably to about 260° C, at a pressure in the range of from about 20, preferably from about 40, to about 100, preferably to about 60, until cessation of the generation of water as an esterification product, as indicated by a sharp drop in the temperature at the top of the aforesaid distillation column in the reactor.

Thereafter, the secondary esterification step is conducted at a temperature in the range of from about 250° C, preferably from about 255° C, to about 280° C, preferably to about 260° C, and at a pressure of about atmospheric, until at least 97 mole percent of the carboxyl end groups of the esterification product have reacted.

In the aforesaid preferred embodiment of the method of this invention, in which the esterification stage involves a primary esterification step and a secondary esterification step, the oligomeric product of the secondary esterification step is then polymerized in the polycondensation stage, which involves an initial polymerization step characterized by a sub-atmospheric reaction pressure, followed by a final polymerization step characterized by a relatively lower sub-atmospheric reaction pressure. An intermediate polymerization step or steps between the initial and final polymerization steps may also be employed.

The initial polymerization step of the second or polycondensation stage involves heating the prepolymer or oligomer from the secondary esterification step of the esterification stage at a temperature in the range of from about 270° C, preferably from about 275° C, to about 290° C, preferably to about 285° C, while reducing the pressure from about atmospheric at a rate in the range of from about 0.1, preferably from about 0.5, to about 10, preferably to about 2, inches of mercury per minute, to a predetermined pressure in the range of from about 0.1, preferably from about 0.5, to about 25, preferably to about 10, millimeters of mercury.

Thereafter, the final polymerization step involves heating at a temperature in the range of from about 275° C, preferably from about 285° C, to about 300° C, preferably to about 290° C, which is in the range of from about 0° C, preferably from about 5° C, to about 30° C, preferably to about 15° C, higher than the temperature in the initial polymerization step and at the aforesaid predetermined pressure in the range of from about 0.1, preferably from about 0.5, to about 5, preferably to about 2, until polyethylene terephthalate having the predetermined intrinsic viscosity is obtained.

The measurements of intrinsic viscosity were carried out in an 8 percent solution of the polyethylene terephthalate in o-chlorophenol at 25° C. The measurement serves as a measure of the degree of polymerization, namely, the higher the intrinsic viscosity, the higher the molecular weight and therefore the greater the degree of polymerization. In film and fiber applications, it is generally accepted that for polyethylene terephthalate, an intrinsic viscosity in the range of from about 0.5 to about 1.0 is preferred.

The catalyst system employed in the method of this invention consists essentially of an antimony-containing component, a cobalt-containing component and a manganese-containing component. All three of these components must be present during the second or polycondensation stage. Thus, all three of these components can be added at the commencement of the second stage. In the alternative, at least a portion of at least one of the cobalt-containing component and the manganese-containing component can be added at the commencement of or during the first or esterification stage. In one embodiment, both the cobalt- and manganese-containing components are introduced into the reactor in or in admixture with the terephthalic acid. However, if the antimony-containing component is present during the first or esterification stage, the resulting polyethylene terephthalate has reduced optical characteristics.

The antimony-containing component is employed at a level in the range of from about 174, to about 290, preferably to about 278, more preferably to about 254 parts of antimony, calculated as elemental antimony, per million parts by weight of terephthalic acid employed in the first stage. In other terms, the antimony-containing component is employed at a level in the range of from about 150, to about 250, preferably to about 240, more preferably to about 220, parts of antimony, calculated as elemental antimony, per million parts by weight of calculated amount of polyethylene terephthalate theoretically produced. As illustrated clearly in the examples hereinbelow, the upper limits of the concentration ranges for antimony are a critical feature of the method of this invention.

The cobalt-containing component is employed at a level in the range of from about 5, preferably from about 15, to about 50, preferably to about 25, parts of cobalt, calculated as elemental cobalt, per million parts by weight of terephthalic acid employed in the first stage. The manganese-containing component is employed at a level in the range of from about 20, preferably from about 55, to about 150, preferably to about 95, parts of manganese, calculated as elemental manganese, per million parts by weight of terephthalic acid employed in the first stage.

Examples of antimony compounds that are suitable sources of the antimony component of the catalyst system of the present invention include antimony metal or metal alloys, antimony III and IV halides, hydroxides and sulfides, antimony III, IV and V oxides, antimony salts of carboxylic acids such as acetate,

lactate, oxalate, phthatlate, or benzoate, antimony III and V glycolates and antimony alcoholates.

Examples of cobalt salts that are suitable sources of the cobalt-containing component of the catalyst system of the method of this invention include cobaltous acetate hydrate, cobaltous nitrate, cobaltous chloride, cobalt acetylacetonate, cobalt naphthenate and cobalt salicyl salicylate.

Examples of manganese salts that are suitable sources of the manganese-containing component of the catalyst system of the method of the present invention include manganous benzoate tetrahydrate, manganese chloride, manganese oxide, manganese acetate, manganese acetylacetonate, manganese succinate, manganese diethyldithiocarbonate, manganese antimonate, manganese phosphate monohydrate, manganese glycoloxide, manganese naphthenate, and manganese salicyl salicylate.

We have found that the use of the combination of the cobalt-, manganese- and antimony-containing components in the polycondensation catalyst system employed in the method of this invention affords a substantial increase in the rate of polymerization over that for a catalyst of an antimony-containing compound alone. This higher rate of polymerization cannot be obtained with either only an antimony-containing component at higher concentrations of antimony, or the combination of an antimony-containing component with only one of a cobalt- or a manganese-containing component, or the combination of only a cobalt-containing component and a manganese-containing component. Furthermore, essentially the same increase in polymerization rate is obtained regardless of whether (a) the cobalt- and manganese-containing components are introduced in the esterification stage before the antimony-containing component is introduced in the polycondensation stage or (b) the cobalt-, manganese- and antimony-containing components are introduced in the polycondensation stage.

The polycondensing stage of this process further comprises the addition of certain phosphorus-containing compounds into the polycondensation reaction zone. The term "phosphorus-containing" compounds as used herein is intended to mean one or more compounds which contain phosphorus and which are known in the prior art to be useful as stabilizers for metals or color forming inhibitors in polyester polycondensing reactions. Some of the phosphorus compounds suitable for this process are disclosed in U.S. Pat. Nos. 3,028,366 (1962) and 3,962,189 (1976), the disclosure of which is hereby incorporated by reference. Preferred of the phosphorus compounds are phosphoric acid, salts of said acid, and phosphate esters, including, for example, ethyl acid phosphate, diethyl acid phosphate, triethyl acid phosphate, aryl alkyl phosphate, tris-2-ethylhexyl phosphate, and a phosphate ester having the formula:

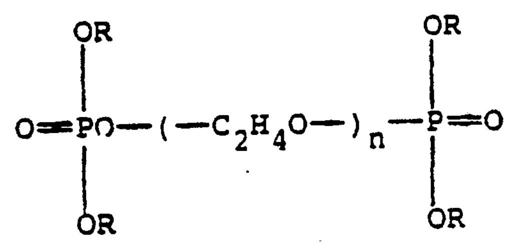

wherein n has an average value of 1.5 to about 3.0 with about 1 percent being most preferred and each R is hydrogen or an alkyl radical having from 6 to 10 carbon atoms with octyl being most preferred, the ratio of the number of R groups of hydrogen atoms to the number of phosphorus atoms being about 0.25 to 0.50 with about 0.35 being most preferred; and the ester having a free acidity equivalent of about 0.2 to 0.5, the ester being present in the amount to provide phosphorus in the amounts of 13-240 parts per million based on the acid fraction of the polyester to be produced. Other phosphate esters useful in this invention include ethyl acid phosphate, diethyl acid phosphate, triethyl acid phosphate, aryl alkyl phosphates, tris-2-ethylhexyl phosphate and the like.

The amount of phosphorus-containing compounds employed will vary depending on the total amount of catalyst metals used. Normally an amount in the range of about 0.1 to about 2.0 moles for each mole of total catalyst metals is suitable.

The resulting polyethylene terephthalate product of the method of this invention has improved color and fluorescence characteristics, and a lower content of high molecular weight impurities which are by-products of the esterification or polycondensation reaction or both. These improvements are relative to the color and fluorescence characteristics, and the content of high molecular weight impurities in polyethylene terephthalates which are produced by processes which correspond to the method of this invention, except that they omit the cobalt- and/or manganese-containing components of the polycondensation catalyst system or they employ higher levels of the antimony-containing component of the catalyst system of the method of this invention.

Similarly, the product of the method of this invention has a relatively lower content of colored impurities. The color level of polyethylene terephthalate can be ascertained by measuring its b*-value on the Hunter Color Scale as described in Hunter, "The Measurement of Appearance," Chapter 8, pages 102-132, John Wiley & Sons, N.Y., N.Y. (1975), and in Wyszecki et al., "Color Science, Concepts and Methods, Quantitative Data and Formulae," 2d Ed., pages 166-168, John Wiley & Sons, N.Y., N.Y. (1982).

More specifically, the b*-value of polyethylene terephthalate can be determined using, for example, a Diano Match Scan Spectrophotometer as follows. Polyethylene terephthalate is pressed into a pellet having a thickness of about 0.25 inch and a diameter of about 1 inch. The pellet is then irradicated with white light that has been UV-filtered. The spectrum of the visible light reflected from the sample is determined and tristimulus values (X, Y, and Z) are computed using the CIE Standard Observer functions. Using the weighted-ordinate method, tristimulus values are obtained from the following equations:

$$X = \sum_{400}^{700} R_\lambda \bar{x}_\lambda \quad Y = \sum_{400}^{700} R_\lambda \bar{y}_\lambda \quad Z = \sum_{400}^{700} R_\lambda \bar{z}_\lambda ,$$

where $R_\lambda$ is the percent reflectance of the object at wavelength $\lambda$ and $\bar{x}_\lambda$, $\bar{y}_\lambda$ and $\bar{z}_\lambda$ are the Standard Observer functions at wavelength $\lambda$ for CIE Illuminant D65. The tristimulus values X, Y and Z, identify the color of the object in terms of the mixture of the primary lights that match it visually. Tristimulus values, however, are of limited use as color specifications, because they do not correlate with visually meaningful attributes of color appearance and are not uniform in the spacing of colors as related to visual differences. As a result, "Uniform Color Scales" (UCS) have been adopted which use simple equations to approximate visual response. The UCS scale used by the Diano instrument is the CIE 1976 L*a*b* formula which converts tristimulus values to L*, a*, and b* values as shown below:

$L^* = 25(100Y/Y_o)^{1/3} - 16$

$a^* = 500[(X/X_o)^{1/3} - (Y/Y_o^{1/3}]$

$b^* = 200[(Y/Y_o)^{1/3} - (Z/Z_o)^{1/3}]$

The L*-value is a measure of the luminosity or whiteness of an object where $L^* = 100$ is pure white, $L^* = 0$ is black, and in between is gray. The L*-value is strictly a function of the tristumulus Y-value. The b*-value is a measure of the yellowness-blueness attribute where positive b*-values represent yellow appearance and negative b*-value represent blue appearance. The b*-value is a function of both tristimulus values Y and Z.

The fluorescence indices of the polyethylene terephthalate products were measured by dissolving 0.5 grams of the polyethylene terephthalate in 10 milliliters of a mixture of 30 percent of 1,1,1,3,3,3-hexafluoro-2-propanol and 70 percent of methylene chloride and measuring the emission maximum at a wavelength of 388 manometers using an excitation maximum wavelength of 330 manometers.

2,4′,5-tricarboxybiphenyl (TCBI), 4,4′-dicarboxy-bi-phenyl (D4BI), and 1,2-bis(4-carboxybiphenyl)ethane (BCPE) are high molecular weight impurities in polyethylene terephthalate that are formed as byproducts during the polyesterification process. Their concentrations in polyethylene terephthalate were determined by reacting the polyethylene terephthalate with potassium hydroxide dissolved in methanol, separating the aforesaid high molecular weight impurities from the resulting solution by reversed phase high pressure liquid chromatography and then measuring the concentrations of the separated aforesaid high molecular weight impurities by ultraviolet absorption.

The present invention will be more clearly understood from the following specific examples.

## EXAMPLES 1-11

For each of Examples 1-11, a two-liter reactor was used to carry out both the esterification and polymerization stages. The reactor was equipped with an agitator and torque meter, a distillation column for removing water of reaction from top thereof, and returning ethylene glycol from bottom thereof to the reactor, and a bottom valve for removal of the polyester product.

To the reactor was added 700 grams of purified terephthalic acid containing less than 25 ppm of 4-carboxybenzaldehyde. For Examples 1-4, 365 grams of ethylene glycol (for a mole ratio of 1.4 moles of ethylene glycol per mole of terephthalic acid) was added. For Examples 5-9 and 10-11, 315 grams and 290 grams of ethylene glycol were added, respectively, corresponding to mole ratios respectively of 1.2 and 1.1

moles of ethylene glycol per mole of terephthalic acid. Also added in all examples were 0.064 grams of an aqueous solution containing 50 weight percent of choline hydroxide (a nitrogen-containing compound) for suppression of the formation of diethylene glycol from ethylene glycol.

In Examples 2, 6 and 8, 0.062 grams of cobalt acetate tetrahydrate were added (corresponding to 21 parts of cobalt, calculated as the elemental metal, per million parts by weight of terephthalic acid, or 18 parts of cobalt, calculated as the elemental metal, per million parts of the calculated amount of polyethylene terephthalate that is to be produced theoretically). In Examples 4,9,and 11, 0.068 grams of cobalt acetate tetrahydrate were added (corresponding to 23 ppm of cobalt metal based on terephthalic acid; 20 ppm based on theoretical polymer weight). In Examples 1,3,5,7 and 10, no cobalt was added. In Examples 2,6,and 8, 0.241 grams of manganese acetate tetrahydrate were added (corresponding to 77 ppm of manganese metal based on terephthalic acid; 67 ppm based on theoretical polymer weight). In Examples 4,9, and 11, 0.272 grams of manganese acetate tetrahydrate were added (corresponding to 87 ppm of manganese metal based on terephthalic acid; 75 ppm based on theoretical polymer weight). All of these part per million concentrations in Examples 1-24 are by weight.

The stirrer was turned on at 60 rpm to obtain a well-mixed suspension of the charge components. In all examples, other catalyst components and additives were added at a later stage as described. Prior to application of heat, the reactor was pressured and vented several times with nitrogen to purge all oxygen, after which a pressure of 50 pounds per square inch gauge was retained. Heat was applied to the external walls of the vessel at which point this was considered the start of the experiment, that is, time zero.

The primary esterification step was conducted with an external temperature setpoint of 271 °C. Over a period of approximately 180 minutes, the internal temperature increased non-linearly to the 271 °C target. After approximately 50 minutes, the top of the distillation column reached a temperature of 148 °C, the boiling point of water, denoting that esterification was proceeding. At approximately 140 minutes, the temperature at the column top dropped rapidly, denoting completion of this reaction step, at which time the pressure was reduced to atmospheric. Water was observed to continue being removed from the top of the column at a temperature of 100 °C. Prior experimentation has determined that the secondary esterication step is complete, with greater than about 97 mole percent of the carboxy end groups having reacted after about 180 minutes. Prior to this time, catalyst compounds are added as follows.

In Examples 1 and 2, 0.284 grams of antimony trioxide were added (corresponding to 339 ppm of antimony metal based on terephthalic acid; 293 ppm.based on theoretical polymer weight) at 170 minutes, as a mixture with three milliliters of ethylene glycol. In Examples 5 and 6, 0.231 grams of antimony trioxide were added (corresponding to 276 ppm of antimony metal based on terephthalic acid; 239 ppm based on theoretical polymer weight) at 170 minutes, as a mixture with three milliliters of ethylene glycol. In Examples 3,4 and 7-11, 0.185 grams of antimony trioxide were added (corresponding to 221 ppm of antimony metal based on terephthalic acid; 191 ppm based on theoretical polymer weight) at 170 minutes, as a mixture with three milliliters of ethylene glycol.

In Examples 1 and 2, 0.033 grams of a phosphorus-containing compound were added (corresponding to 18 ppm of phosphorus metal based on terephthalic acid; 16 ppm based on theoretical polymer weight) at 175 minutes, as a solution in two milliliters of ethylene glycol. In Examples 3-11, 0.055 grams of a phosphoric acid were added (corresponding to 30 ppm of phosphorus metal based on terephthalic acid; 26 ppm based on theoretical polymer weight) at 175 minutes, as a solution in two milliliters of ethyene glycol.

At 180 minutes, the initial polycondensation step commenced by reducing the pressure from atmospheric at an initial rate of 1 inch of mercury per minute, and increasing the setpoint temperature of the external walls of the reactor to 285 °C. Over a period of approximately 20 minutes, the internal temperature increased non-linearly to the 285 °C target. At 215 minutes after startup, the speed of the stirrer was reduced to 40 rpm. At 240 minutes after startup, the pressure reached 1.5 millimeters of mercury absolute, denoting the end of the initial polymerization step and commencement of the final polymerization step. The pressure of 1.5 millimeters of mercury absolute was held for the remainder of the high polymerization period which was terminated at a predetermined stirrer torque that corresponded to a target intrinsic viscosity of the polyethylene terephthalate product of between 0.64 and 0.65. The time taken from 180 minutes from startup and the time at which the predetermined torque was reached was reported as the total polymerization time. At this point the reactor was pressurized with nitrogen to just above atmospheric pressure, the stirrer was stopped and the contents removed through the valve in the bottom and quenched rapidly to room temperature in water. Thereafter the important properties of the polyethylene terephthalate product were measured. These are presented in Table 2.

By reference to TABLE 1, it is readily apparent that the addition of cobalt and manganese not only reduces the polymerization time relative to non-addition of cobalt and manganese, but in all cases as shown in TABLE 2, results in reduction of high molecular weight byproduct impurities, many of which are colored

and/or fluorescent, and exemplified here by 2,4′,5-tricarboxybiphenyl (TCBI), 4,4′-dicarboxybiphenyl (D4BI) and 1,2-bis(4-carboxybiphenyl)ethane (BCPE), and hence affords a polyethylene terephthalate product of superior purity. In all cases except Examples 2 and 11, the reduction in byproduct formation is accompanied by superior optical properties exemplified by all of greater whiteness, lower yellowness and lower fluorescence. Further, reduction of both mole ratio and antimony catalyst, which, while resulting in optical property improvement as well known to those versed in the art, carries the disadvantage of increasing the polymerization time which in turn carries an economic penalty. This disadvantage can be offset by adding cobalt and manganese together to recover polymerization time and, commensuratey and surprisingly, even improve optical properties of the PET, as shown by Example 4 versus Example 3, Example 6 versus Example 5, Examples 8 and 9 versus Example 7, and Example 11 versus Example 10. Further still, in the extreme of the lowest mole ratio and antimony concentration, the presence of cobalt and antimony, Example 11, results in an equivalent polymerization time as the most efficient polymerization rate case, without the presence of cobalt and manganese, which is at both high mole ratio and catalyst concentration, Example 1.

TABLE 1

| | | Metals Concentrations [2] Catalyst System | | | | | |
|---|---|---|---|---|---|---|---|
| Example | EG: TA[1] | Co | Mn | Sb | P | Total Poly. Time[3] | I.V.[4] |
| 1 | 1.4 | - | - | 339 | 18 | 140 | 0.653 |
| 2 | 1.4 | 21 | 77 | 339 | 18 | 100 | 0.666 |
| 3 | 1.4 | - | - | 221 | 30 | 160 | 0.668 |
| 4 | 1.4 | 23 | 87 | 221 | 30 | 120 | 0.686 |
| 5 | 1.2 | - | - | 276 | 30 | 145 | 0.671 |
| 6 | 1.2 | 21 | 77 | 276 | 30 | 110 | 0.644 |
| 7 | 1.2 | - | - | 221 | 30 | 160 | 0.670 |
| 8 | 1.2 | 21 | 77 | 221 | 30 | 125 | 0.632 |
| 9 | 1.2 | 23 | 87 | 221 | 30 | 110 | 0.649 |
| 10 | 1.1 | - | - | 221 | 30 | 160 | 0.640 |
| 11 | 1.1 | 23 | 87 | 221 | 30 | 140 | 0.640 |

Footnotes

1 mole ratio of ethylene glycol-to-terephthalic acid

2 parts of metal, calculated as the elemental metal, per million parts by weight of terephthalic acid

3 minutes

4 intrinsic viscosity

TABLE 2

| | Color | | | High Mol. Wt. Impurity Content[1] | | |
|---|---|---|---|---|---|---|
| Example | L* | b* | Fluor. Index | TCBI | D4BI | BCPE |
| 1 | 86.79 | 3.08 | 2.82 | 49 | 156 | 110 |
| 2 | 88.37 | 3.38 | 1.19 | 21 | 90 | 29 |
| 3 | 88.86 | 3.35 | - | 108 | 173 | 120 |
| 4 | 89.85 | 1.96 | - | 47 | 96 | 39 |
| 5 | 87.62 | 2.62 | 2.40 | 39 | 142 | 77 |
| 6 | 88.47 | 2.18 | 1.24 | 17 | 80 | 25 |
| 7 | 89.23 | 2.94 | 2.21 | 26 | 132 | 70 |
| 8 | 90.21 | 1.58 | 1.55 | 22 | 96 | 39 |
| 9 | 89.95 | 0.98 | 1.27 | 14 | 87 | 26 |
| 10 | 92.92 | 2.98 | - | 30 | 106 | 36 |
| 11 | 90.99 | 0.72 | - | 25 | 88 | 20 |

Footnotes

1 parts per million parts by weight of polyethylene terephthalate product

## EXAMPLES 12-24

The procedure of Examples 1-11 was repeated, except that to the reactor was added 900 grams of purified terephthalic acid containing less than 25 parts of 4-carboxybenzaldehyde per million parts of terephthalic acid; 405 grams of ethylene glycol (for a mole ratio of 1.2 moles of ethylene glycol per mole of terephthalic acid); 0.064 grams of the same aqueous solution of choline hydroxide employed in Examples 1-11, for suppression of the formation of diethylene glycol from ethylene glycol. The stirrer was turned on at 60 rpm to obtain a well-mixed suspension of charge components. Unlike Examples 1-11, cobalt-containing and manganese-containing components of the catalyst system and other catalyst components and additives were added at a later stage, as described. Prior to application of heat, the reactor was pressured and vented several times with nitrogen to purge all oxygen, after which a pressure of 50 psig was retained. Heat was applied to the external walls of the vessel at which point this was considered the start of the experiment, that is, time zero.

The primary esterification step was conducted as described in Examples 1-11, with the difference that it took approximately 60 minutes for the top of the distillation column to reach a temperature of 148 °C, the boiling point of water, denoting that esterification was proceeding. Also approximately 170 minutes elapsed for the temperature of the column top to drop rapidly, denoting completion of this reaction step and prior to depressurization to atmospheric pressure for the secondary esterification step.

Prior to the completion of the secondary esterification step which occurred in these examples at 230 minutes, cobalt acetate tetrahydrate and manganese acatate tetrahydrate were added at 215 minutes with two milliliters of ethylene glycol rinse in the amounts shown in Table 3; antimony trioxide catalyst was added at 220 minutes with two milliliters of ethylene glycol rinse in the amount of 0.312 grams corresponding to 290 ppm of antimony metal based on terephthalic acid (or 250 ppm based on theoretical polymer weight); a phosphoric acid was added at 225 minutes with two milliliters of EG rinse in the amount of 0.070 grams corresponding to 30 ppm of phosphorus metal based on terephthalic acid (26 ppm based on theoretical polymer weight).

At 230 minutes the initial polycondensation step commenced by reducing the pressure from atmospheric at an initial rate of 1 inch of mercury per minute, and increasing the setpoint temperature of the external walls of the reactor to 293 °C. At a point in time when the reactor internal temperature reached a 285 °C target, the external set-point temperature was adjusted to maintain this.

When the pressure reached 1.5 millimeters of mercury absolute, denoting the end of the initial

polymerization step and commencement of the final polymerization step, this pressure of 1.5 millimeters of mercury absolute was held for the remainder of the final polymerization period. At intermediate periods of time when the stirrer torque reached predetermined levels, stirrer speed was reduced successively to 50 rpm and 40 rpm. This stirrer speed and pressure was maintained throughout the final polymerization period until a predetermined stirrer torque was reached and which corresponded to a target intrinsic viscosity of the polyethylene terephthalate product of between 0.64 and 0.65. The time taken from 230 minutes from startup and the time at which the predetermined torque was reached was reported as the total polymerization time. At this point the reactor was pressurized with nitrogen to just above atmospheric pressure, the stirrer was stopped and the contents removed through a valve in the bottom and rapidly quenched in water to room temperature. Thereafter the important properties of polyethylene terephthalate product were measured. These are presented in Table 4.

The results of Examples 1-24 indicate very clearly that the color and fluorescence properties of polyethylene terephthalate show only a marginal improvement which improves very substantially when the antimony content of the catalyst system decreases from 290 to 221 parts of the antimony-containing component, calculated as elemental antimony, per million parts by weight of terephthalic acid.

TABLE 3

| | Catalyst System[1] | | | |
|---|---|---|---|---|
| Example | Co | Mn | Total Poly[2] Time | I.V. [3] |
| 12 | - | - | 125 | 0.658 |
| 13 | - | - | 125 | 0.644 |
| 14 | - | - | 123 | 0.651 |
| 15 | 15 | 56 | 116 | 0.660 |
| 16 | 15 | 56 | 112 | 0.641 |
| 17 | 20 | 75 | 100 | 0.648 |
| 18 | 20 | 75 | 100 | 0.646 |
| 19 | 25 | 56 | 107 | 0.644 |
| 20 | 25 | 56 | 107 | 0.636 |
| 21 | 15 | 94 | 102 | 0.661 |
| 22 | 15 | 94 | 102 | 0.636 |
| 23 | 25 | 94 | 97 | 0.658 |
| 24 | 25 | 94 | 98 | 0.637 |

Footnotes

1 parts of metal, calculated as the elemental metal, per million parts by weight of terephthalic acid, and including 290 parts of antimony, calculated as elemental antimony, per million parts by weight of terephthalic acid

2 minutes

3 intrinsic viscosity

TABLE 4

| | Color | | High Mol. Wt. Impurity Content[1] | | |
|---|---|---|---|---|---|
| Example | L* | b* | TCBI | D4BI | BCPE |
| 12 | 85.45 | 1.63 | 39 | 146 | 57 |
| 13 | 86.06 | 1.65 | 35 | 137 | 55 |
| 14 | 85.75 | 1.81 | 39 | 149 | 64 |
| 15 | 88.23 | 2.80 | 27 | 121 | 35 |
| 16 | 86.92 | 3.40 | 29 | 128 | 40 |
| 17 | 86.47 | 1.95 | 24 | 118 | 30 |
| 18 | 87.41 | 2.85 | 24 | 113 | 32 |
| 19 | 88.34 | 1.85 | 29 | 119 | 43 |
| 20 | 87.75 | 2.01 | 24 | 114 | 37 |
| 21 | 86.94 | 2.64 | 22 | 118 | 28 |
| 22 | 87.11 | 3.17 | 23 | 121 | 32 |
| 23 | 88.02 | 1.26 | 22 | 115 | 26 |
| 24 | 87.99 | 2.19 | 23 | 114 | 32 |

Footnotes

1 parts per million parts by weight of polyethylene terephthalate

From the above description, it is apparent that the objects of the present invention have been achieved. While only certain embodiments have been set forth, alternative embodiments and various modifications will be apparent from the description to those skilled in the art. These and other alternatives are considered equivalents and within the spirit and scope of the present invention.

## Claims

1. A process for preparing polyethylene terephthalate having a predetermined intrinsic viscosity, comprising:

(a) reacting ethylene glycol with terephthalic acid containing less than 500 parts of 4-carboxybenzaldehyde per million parts of terephthalic acid, at a mole ratio of from about 1.05 to about 1.5 moles of ethylene glycol per mole of terephthalic acid, at a temperature in the range of from about 250 °C to about 280 °C, and at a pressure in the range of from about atmospheric to about 100 pounds per square inch gauge to thereby form a product mixture comprising water and an esterification product of ethylene glycol and terephthalic acid, until substantial cessation of the generation of water and at least about 97 percent of the carboxyl end groups have reacted, and removing water from the product mixture; and

(b) heating the product mixture of step (a) in the presence of a catalyst consisting essentially of an antimony-containing component at a level of from about 175 to about 278 parts of antimony, a cobalt-containing component at a level of from about 5 to about 50 parts of cobalt, and a manganese-containing component at a level of from about 20 to about 150 parts of manganese, each calculated as the elemental metal, per million parts by weight of the terephthalic acid employed in step (a), at a temperature in the range of from about 270 °C to about 300 °C and at a pressure in the range of from about 0.1 to about 25 millimeters of mercury, heating being continued until polyethylene terephthalate having the predetermined intrinsic viscosity is formed, the resulting polyethylene terephthalate having improved color and fluorescence characteristics and a reduced content of high molecular weight impurities.

2. The process of Claim 1 wherein the catalyst employed in step (b) consists essentially of the antimony-containing component at a level of from about 175 to about 278 parts of antimony, a cobalt-containing component at a level of from about 15 to about 25 parts of cobalt, and a manganese-containing component at a level of from about 55 to about 95 parts of manganese, each calculated as the elemental metal, per million parts by weight of the terephthalic acid employed in step (a).

3. The process of Claim 1 or Claim 2 wherein step (a) is performed in the presence of a catalyst that consists essentially of a cobalt-containing component of from about 5 to about 50 parts of cobalt and a

manganese-containing component of from about 20 to about 150 parts of manganese, each calculated as the elemental metal, per million parts by weight of the terephthalic acid employed in step (a).

4. The process of Claim 3 wherein step (a) is performed in the presence of a metal-containing mixture that consists essentially of a cobalt-containing component at a level of from about 15 to about 25 parts of cobalt and a manganese-containing component at a level of from about 55 to about 95 parts of manganese, each calculated as the elemental metal, per million parts by weight of the terephthalic acid employed in step (a).

5. The process of Claim 3 wherein the cobalt- and manganese-containing components are introduced into the reactor mixture in or in admixture with the terephthalic acid.

6. The process of any preceding claim wherein terephthalic acid and ethylene glycol are reacted at a mole ratio of from about 1.15 to about 1.25 moles of ethylene glycol per mole of terephthalic acid.

7. The process of any preceding claim wherein the terephthalic acid employed contains less than 200 parts of 4-carboxybenzaldehyde per million parts of terephthalic acid.

8. The process of any preceding claim wherein step (a) is performed at a temperature in the range of from about 255°C to about 275°C and at a pressure in the range of from about 40 atmospheric to about 60 pounds per square inch gauge.

9. The process of any preceding claim wherein step (b) is performed at a temperature in the range of from about 280°C to about 290°C and at a pressure in the range of from about 0.5 to about 2 millimeters of mercury.

10. The process of any preceding claim wherein a catalyst stabilizer is employed in step (b).

11. The process of Claim 10 wherein the catalyst stabilizer comprises a phosphorus-containing component at a level of from about 6 to about 60 parts of phosphorus, calculated as elemental phosphorus, per million parts by weight of the terephthalic acid employed in step (a).

12. The process of Claim 11 wherein the phosphorus-containing component is at a level of from about 18 to about 30 parts of phosphorus, calculated as elemental phosphorus, per million parts by weight of terephthalic acid employed in step (a).

13. The process of any of Claims 1 to7, 10 and 11 wherein step (a) is performed:

(i) initially at a pressure in the range of from about 20 to about 100 pounds per square inch gauge at a temperature in the range of from about 250°C to about 280°C, until substantial cessation of the generation of water as a reaction product; and

(ii) thereafter at about atmospheric pressure and at a temperature in the range of from 250°C to about 280°C until at least 97 mole percent of the carboxyl end groups have reacted with ethylene glycol,

and wherein step (b) is performed:

(i) initially at a temperature in the range of from about 270°C to about 295°C, while reducing the pressure from about atmospheric at a rate in the range of from about 0.1 to about 5 inches of mercury per minute until a predetermined pressure in the range of from about 0.1 to about 25 millimeters of mercury; and

(ii) thereafter at a temperature in the range of from about 275°C to about 300°C, that is from about 0°C to about 30°C higher than the temperature employed in step (b)(i), and at the aforesaid predetermined pressure in the range of from about 0.1 to about 25 millimeters of mercury, until the resulting polyethylene terephthalate product has the predetermined intrinsic viscosity.

14. The process of Claim 13 wherein step (a)(i) is performed at a temperature in the range of from about 255°C to about 260°C and at a pressure in the range of from about 40 to about 60 pounds per square inch gauge.

15. The process of Claim 13 wherein step (a)(ii) is performed at a temperature in the range of from about 255°C to about 260°C.

16. The process of Claim 13 or Claim 14 wherein step (b)(i) is performed at a temperature in the range of from about 275°C to about 285°C.

17. The process of any of Claims 13 to 16 wherein the pressure is reduced at a rate in the range of from about 0.5 to about 2 inches of mercury per minute.

18. The process of any of Claims 13 to 17 wherein in step (b)(i) the pressure is reduced to a predetermined pressure in the range of from about 0.5 to about 10 millimeters of mercury.

19. The process of any of Claims 13 to 18 wherein the final polymerization in step (b)(ii) is at a temperature in the range of from about 275°C to about 285°C.

20. The process of any of Claims 13 to 19 wherein the temperature of the final polymerization in step (b)(ii) is from about 5°C to about 15°C above the temperature of the initial polymerization in step (b)(i).

21. The process of any preceding claim wherein each of steps (a) and (b) is performed in the absence of a separate solvent.